# EUROPEAN PATENT APPLICATION

(11) **EP 2 116 126 A1**
(43) Date of publication of application: **11.11.2009**
(21) Application number: 08103831.7
(22) Date of filing: 06.05.2008
(51) Int. Cl.: A01G 1/06, A01G 17/18, A01N 3/04

(54) **Method and apparatus for grafting plants with fast-curing adhesives**

(71) Applicant: Henkel AG & Co. KGaA, 40589 Düsseldorf (DE)
(72) Inventor: Schmid, Christoph, 82216 Maisach (DE); Garnich, Florian, 81545 Munich (DE); Marxmüller, Till, 81539 Munich (DE); Farell, David, Tallaght, Dublin 24 (IE); McArdle, Ciaran, Tallaght, Dublin 24 (IE); Levi, Stefano, 40589 Düsseldorf (DE); Parals, Maria, 40589 Düsseldorf (DE)

(57) **Abstract**

The following steps are carried out for the propagation of plants by grafting part of a first plant on at least part of a second plant:
preparing the part (20) of the first plant and the at least part (18) of the second plant by baring part of the tissue of the first and the second plant;
bringing into contact the bared parts (18, 20) of tissue of the first and second plant at an intersection;
applying a fast-curing adhesive (70) around the intersection onto the surface of the plants, the adhesive (70) being an adhesive which is curable by light; and
curing the adhesive (70) by irradiation of light.

## Description

This invention relates to a method and an apparatus for the propagation of plants by grafting part of a first plant on at least a part of a second plant using fast-curing adhesives.

This invention also relates to the use of such fast curing adhesives in automated grafting machines.

Tools such as rubber bands, clips, pegs, patches compounding substances etc. are commonly used in grafting for uniting two plants or dressing wounds on plants. Rendering such tools unnecessary would be a highly desirable goal because throughput of botanical grafting may be increased without an attendant increase in labor and time.

JP-10-155360-A discloses a method and an apparatus for grafting plants with fast-curing adhesives in order to overcome the cost and disposal problems of clips. The fast curing adhesive is a cyanoacrylate (CA) type adhesive. In order to achieve quick setting, a hardening accelerator of acetone type solvent is used. The survival rate of plants grafted in this way is however rather low.

FR-2775869 A1 discloses a method for treating wounds on trees, shrubs or woody perennial plants by cauterization. The method includes surface-disinfecting the wound by an intense optical source, until such a temperature is reached that bacteria, fungi and molds are destroyed, then sealing the wound by the same optical source on a surface layer and changing the physical and chemical state of the surface, thereby isolating the wound from the exterior. The sealing operation can be achieved by depositing a material that forms a thin layer over the wound. Radiation heating then hardens it, sealing the exposed pores. The layer reaches temperatures of 60-300 °C. The layer is a product that polymerizes under heat and can be a silicone-based solution, an adhesive acrylic paste or an epoxy resin.

The problem underlying the invention is how to enhance the survival rate of plants grafted or the rate of successfully growing of one plant on another plant by the use of fast-curing adhesives.

This problem is solved according to the invention by a method for the propagation of plants by grafting part of a first plant on at least part of a second plant, comprising the following steps:
preparing the part of the first plant and the at least part of the second plant by baring part of the tissue of the first and the second plant;
bringing into contact the bared parts of tissue of the first and second plant at an intersection;
applying a fast-curing adhesive around the intersection onto the surface of the plants, the adhesive being curable by light; and
curing the adhesive by irradiation of light.

Preferably, the adhesive is curable by light having a wavelength between 200 and 500 nm. The light with which the adhesive is irradiated has a wavelength in that range.

The adhesive used is based on a cyanoacrylate monomer, such as an ethyl cyanoacrylate monomer, which may be cured after exposure to radiation in the electromagnetic spectrum. In this regard, the adhesive includes a photoinitiator. It can be dispensed either as a liquid (viscosity between 400 and 5000 mPa·s as measured by a Brookfield-type viscometer) or as foam.

Significant stringing of the adhesive after dispensing the adhesive should be avoided. The adhesive should therefore be thixotropic like the LOCTITE^{®} product CA 454, but the viscosity should be less, but larger than 1000mPa·s as measured by a Brookfield-type viscometer. Thixotropic rheology of the adhesive facilitates dispensing and prevents dripping of the adhesive from the plant. Suitable fillers are silica, which needs to be dried in order to be compatible with CA formulation.

Subject matter of the invention is also an apparatus for carrying out the method of the invention in a largely automatic way. The apparatus comprises:
means for clamping the first and second plants so as to bring their bared parts into contact at an intersection;
a nozzle adapted to dispense a light curable adhesive around the intersection, and
a light source for emitting light of a wavelength for curing the adhesive applied around the intersection.

The apparatus may also comprise a nozzle for spraying water, an aqueous solution or a gaseous fluid onto the adhesive applied around the intersection for cooling the applied adhesive.

The apparatus can further comprise a nozzle for directing an air jet onto the applied adhesive so as to spread the adhesive over the surface of the plants. The water spraying nozzle can produce also that air jet.

The present invention is directed to a process for grafting a botanical segment to the same or different botanical segment using a cyanoacrylate-based composition. The cyanoacrylate-based composition may be thickened to allow for the cyanoacrylate composition to remain in the position where it has been applied, rather than either run off because of a the low viscosity of the cyanoacrylate itself or due to the porosity of the branch or stalk which readily accommodates a cyanoacrylate of such low viscosity. Alternatively, or additionally, the cyanoacrylate-based composition may include or be used with a botanical adjuvant selected from bactericides, mammal repellants, fungicides, insect repellants, plant growth regulators (specifically growth promoters), molluscicides, virucides, plant activators (a class of compounds that protect plants by activating their defence mechanisms), insecticides, nematicides, plasticisers, flexibilisers, fluorescent tags, pigments and combinations thereof.

The process includes the provision of a first botanical segment, the provision of a second botanical segment, and the provision of the cyanoacrylate-based composition, where the cyanoacrylate-based composition is dispensed on a portion of at least one of the first botanical segment or the second botanical segment and where the cyanoacrylate-based composition includes beyond a cyanoacrylate component, one or more of a thickening agent, and optionally a botanical adjuvant selected from bactericides, mammal repellants, fungicides, insect repellants, plant growth regulators, molluscicides, virucides, plant activators, insecticides, nematicides, plasticisers, flexibilisers, fluorescent tags, pigments and combinations thereof.

In another aspect of the invention, there is provided a cyanoacrylate composition comprising:
a cyanoacrylate component;
a botanical adjuvant selected from bactericides, mammal repellants, fungicides, insect repellants, plant growth regulators, molluscicides, virucides, plant activators, insecticides, nematicides, plasticisers, flexibilisers, fluorescent tags, pigments and combinations thereof; and
optionally, a thickening agent.

The method of the invention is applicable to all currently used combinations of two plants used in the plant grafting industry. In grafting one plant is usually selected for its roots, and this is called the rootstock. The other plant is selected for its stems, leaves, flowers, or fruits and is called the scion. The general method of grafting with the adhesive comprises the following steps:
- Preparation of the scion and rootstock by cutting the variety used as a base or rootstock and the variety used as the top or scion.
- Disinfection of blades and the bared parts of the plants is advisable to avoid propagation of pathogens.
- The open wounds of the freshly cut scion and rootstock are then held in contact. A slight pressure is advisable to ensure full contact between scion and rootstock.
- Dispensing the adhesive to the point of contact between the rootstock and the scion. The adhesive is dispensed on the exterior part, covering the stem. The pressure between scion and rootstock helps to avoid the adhesive penetrating between the wound of or intersection between rootstock and scion.

The adhesive may be applied in various ways:
- The adhesive may be dispensed manually by a spatula or from a pressurized can or automatically via a dispensing mechanism such a peristaltic pump, a contact-less dispensing nozzle, a membrane valve or a touch transfer dispensing valve.
- The amount of adhesive applied can vary between 5µg and 100µg depending on the dimension of the stem.
- The adhesive can be applied in various geometries, according to the type of graft (cotyledon graft, straight cut, budding cut) and the type of plant.
- The adhesive can be applied as a liquid (viscosity between 400 and 5000 mPa·s) or as foam, if there is the need to provide additional structural support to the grafted plant.

Preferably, the applied adhesive patch is cooled by spraying water, an aqueous solution or a gaseous fluid onto the adhesive during curing thus dissipating the temperature generated by the curing and preventing the adhesive from becoming too hot and damaging the plant. The water is preferably sprayed by an air jet, which spreads the adhesive patch onto the surface of the plants around the intersection of the plant parts.

The inventive cyanoacrylate compositions are a replacement for commonly used tools, and are significant in that in one step they can act to fix together the botanical segments and seal the union formed by the two botanical segments, for instance against the loss of plant humidity. Thus, in addition to replacing mechanical grafting elements such as patches, tapes, clips, and wires, and the oftentimes used sealing liquids, such as waxes like paraffin wax, they provide a vehicle for the delivery of suitable chemically or biologically active substances that modifies the growth of the damaged tissues or provides for crop protection.

The cyanoacrylate component includes cyanoacrylate monomers which may be chosen with a raft of substituents, such as those represented by H₂C=C(CN)-COOR, where R is selected from C₁-₁₅ alkyl, alkoxyalkyl, cycloalkyl, alkenyl, aralkyl, aryl, allyl and haloalkyl groups. Desirably, the cyanoacrylate monomer is selected from methyl cyanoacrylate, ethyl-2-cyanoacrylate, propyl cyanoacrylates, butyl cyanoacrylates (such as n-butyl-2-cyanoacrylate), octyl cyanoacrylates (such as n-octyl-2-cyanoacrylate), allyl cyanoacrylate, ß-methoxyethyl cyanoacrylate and combinations thereof. A particularly desirable one is ethyl-2-cyanoacrylate.

The cyanoacrylate component should be included in the compositions in an amount within the range of from about 50% to about 99.98% by weight, with the range of about 90% to about 99% by weight being desirable, and about 95% by weight of the total composition being particularly desirable.

A host of optional components may be added to the cyanoacrylate-based composition to modify the physical properties of the uncured composition, the cure profile, and the cured composition. For instance, the shelf life of the uncured composition may be adjusted by the addition of stabilizers, such as free radical and anionic stabilizers. The cure profile may be modified by the addition of accelerators to enhance cure speed. The toughness of the cured composition may be modified by the addition of tougheners, such as are described for instance in U.S. Patent Nos. 4,102,945 and 4,440,910. The flexibility of the cured composition may be modified through the use of a plasticizers, such as are described for instance in U.S. Patent Nos. 2,784,127, 2,784,215, 3,699,127, and 4,364,876.

Such accelerators may be selected from calixarenes and oxacalixarenes, silacrowns, crown ethers, cyclodextrins, poly(ethyleneglycol) di(meth)acrylates, ethoxylated hydric compounds and combinations thereof.

Of the calixarenes and oxacalixarenes, many are known, and are reported in the patent literature. See e.g., U.S. Patent Nos. 4,556,700, 4,622,414, 4,636,539, 4,695,615, 4,718,966, and 4,855,461, the disclosures of each of which are hereby expressly incorporated herein by reference.

For instance, as regards calixarenes, those within structure **V** are useful herein: 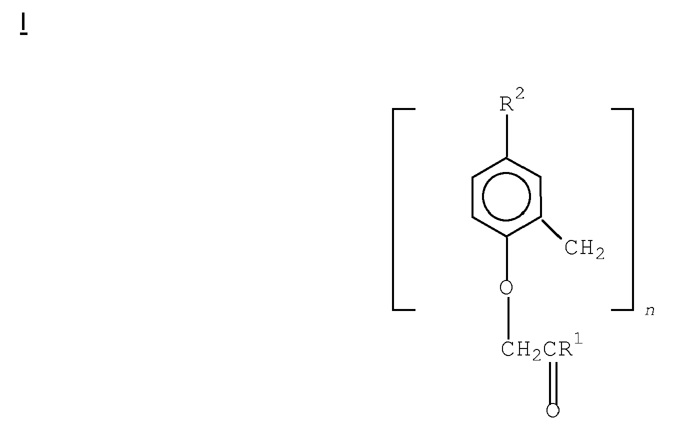 where R¹ is alkyl, alkoxy, substituted alkyl or substituted alkoxy; R² is H or alkyl; and n is 4, 6 or 8.

One particularly desirable calixarene is tetrabutyl tetra[2-ethoxy-2-oxoethoxy]calix-4-arene.

A host of crown ethers are known. For instance, examples which may be used herein either individually or in combination, or in combination with other first accelerators include 15-crown-5, 18-crown-6, dibenzo-18-crown-6, benzo-15-crown-5-dibenzo-24-crown-8, dibenzo-30-crown-10, tribenzo-18-crown-6, asymdibenzo-22-crown-6, dibenzo-14-crown-4, dicyclohexyl-18-crown-6, dicyclohexyl-24-crown-8, cyclohexyl-12-crown-4, 1,2-decalyl-15-crown-5, 1,2-naphtho-15-crown-5, 3,4,5-naphtyl-16-crown-5, 1,2-methyl-benzo-18-crown-6, 1,2-methylbenzo-5, 6-methylbenzo-18-crown-6, 1,2-t-butyl-18-crown-6, 1,2-vinylbenzo-15-crown-5, 1,2-vinylbenzo-18-crown-6, 1,2-t-butyl-cyclohexyl-18-crown-6, asym-dibenzo-22-crown-6 and 1,2-benzo-1,4-benzo-5-oxygen-20-crown-7. See U.S. Patent No. 4,837,260 (Sato), the disclosure of which is hereby expressly incorporated here by reference.

Of the silacrowns, again many are known, and are reported in the literature. For instance, a typical silacrown may be represented within the following structure (**VI**): 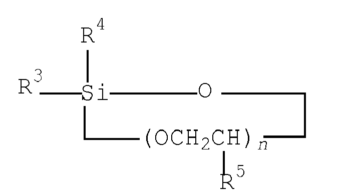 where R³ and R⁴ are organo groups which do not themselves cause polymerization of the cyanoacrylate monomer, R⁵ is H or CH₃ and n is an integer of between 1 and 4. Examples of suitable R³ and R⁴ groups are R groups, alkoxy groups, such as methoxy, and aryloxy groups, such as phenoxy. The R³ and R⁴ groups may contain halogen or other substituents, an example being trifluoropropyl. However, groups not suitable as R⁴ and R⁵ groups are basic groups, such as amino, substituted amino and alkylamino.

Specific examples of silacrown compounds useful in the inventive compositions include: 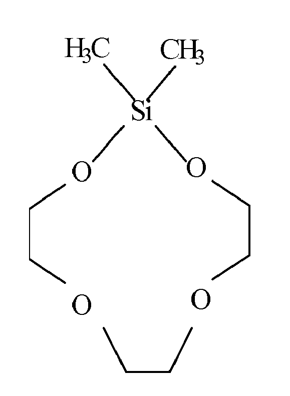 dimethylsila-11-crown-4 (**VII**); 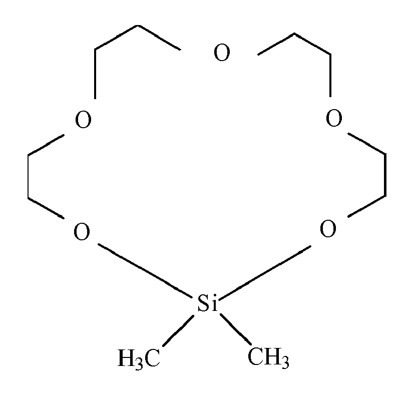 dimethylsila-14-crown-5 (**VIII**); 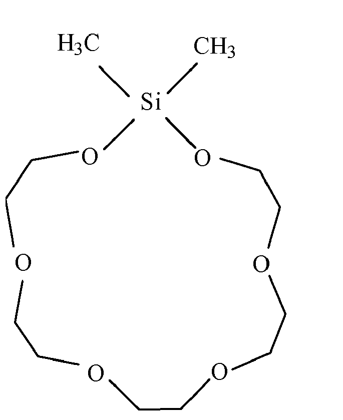 and dimethylsila-17-crown-6 (**IX**).

See e.g., U.S. Patent No. 4,906,317 (Liu), the disclosure of which is hereby expressly incorporated herein by reference.

Many cyclodextrins may be used in connection with the present invention. For instance, those described and claimed in U.S. Patent No. 5,312,864 (Wenz), the disclosure of which is hereby expressly incorporated herein by reference, as hydroxyl group derivatives of an α, β or -cyclodextrin which is at least partly soluble in the cyanoacrylate would be appropriate choices for use herein as the first accelerator component.

For instance, poly(ethylene glycol) di(meth)acrylates suitable for use herein include there within structure **X** below: 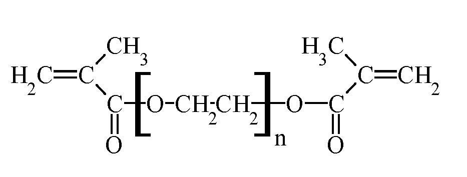 where n is greater than 3, such as within the range of 3 to 12, with n being 9 as particularly desirable. More specific examples include PEG 200 DMA, (where n is about 4) PEG 400 DMA (where n is about 9), PEG 600 DMA (where n is about 14), and PEG 800 DMA (where n is about 19), where the number (e.g., 400) represents the average molecular weight of the glycol portion of the molecule, excluding the two methacrylate groups, expressed as grams/mole (i.e., 400 g/mol). A particularly desirable PEG DMA is PEG 400 DMA.

And of the ethoxylated hydric compounds (or ethoxylated fatty alcohols that may be employed), appropriate ones may be chosen from those within structure **XI:** 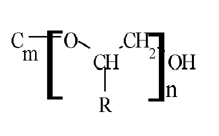 where Cₘ can be a linear or branched alkyl or alkenyl chain, m is an integer between 1 to 30, such as from 5 to 20, n is an integer between 2 to 30, such as from 5 to 15, and R may be H or alkyl, such as C₁-₆ alkyl.

Commercially available examples of materials within structure **XI** include those offered under the DEHYDOL tradename from Henkel KGaA, Dusseldorf, Germany, such as DEHYDOL 100.

In addition, accelerators within the following structure 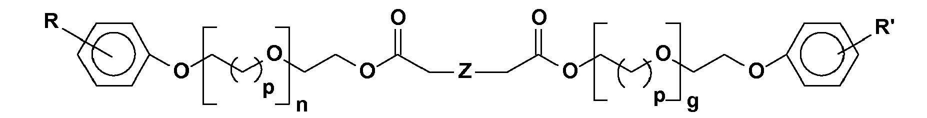 where R is hydrogen, alkyl, alkyloxy, alkyl thioethers, haloalkyl, carboxylic acid and esters thereof, sulfinic, sulfonic and sulfurous acids and esters, phosphinic, phosphonic and phosphorous acids and esters thereof, X is optional, but when present is an aliphatic or aromatic hydrocarbyl linkage, which may be substituted by oxygen or sulfur, and Z is a single or double bond, and R' is the same as R, and g is the same as n.

A particularly desirable chemical within this class as an accelerator component is 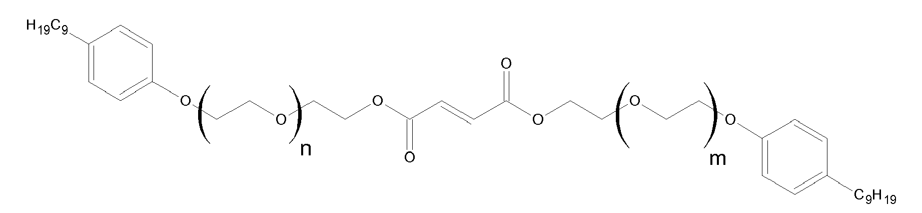 where n and m combined are greater than or equal to 12. See U.S. Patent No. 6,835,789 (Kneafsey).

The cyanocrylate-based composition useful in the present invention, as noted above, may be thickened. Appropriate thickeners include one or more of those conventionally used with cyanoacrylates, such as poly(methylmethacrylates), certain silica gels (as thixotrophy conferring agents), poly(cyanoacrylates), poly(vinyl acetate), and poly(vinyl chloride). In addition, a polymer material constructed from poly(ethylene glycol) and poly(butylene terephthlate) sections may also be used to provide the cyanoacrylate with increased viscosity, thixotropy and/or provide a self supporting material. For instance, one commercially available example of such a material is sold by Octoplus, Netherlands under the tradename PolyActive. PolyActive-brand products are described as biodegradable polymer-based drug delivery systems. PolyActive-brand products represent a series of poly(ether ester) and multiblock copolymers based on poly(ethylene glycol), PEG, and poly(butylene terephthalate), PBT. The amount and length of each of the two building blocks is reported to create a diverse family of polymers with physical properties such as rate of controlled release, degradation, swelling and strength that can be precisely controlled by the appropriate combination of the two copolymer segments. The basic polymer backbone of PolyActive-brand products may be shown as 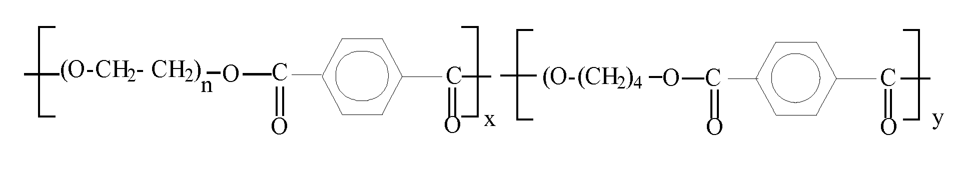 OctoPlus has reported that due to the presence of hydrophilic poly(ethylene glycol) segments, PolyActive-brand products exhibit a hydrogel character.

Importantly, in the grafting of botanicals, it may be desirable to introduce materials such as growth promoters, stimulators or nutrients to assist the graft to take. Moreover, insecticides may also be introduced.

These materials may be introduced either directly into the cyanoacrylate-based composition or may be introduced onto the botanical segments to be grafted, before or after the cyanoacrylate-based composition has been applied. Depending on the identity and the amount of such materials chosen for use, the materials may be as noted above introduced directly into the cyanoacrylate composition, particularly if the materials do not affect the shelf life stability of the composition. If the materiuals chosen do affect the shelf life stability of the composition, they may be introduced into the composition directly before use, introduced by way of a two part dispensing device or applied to the substrate separately from the cyanoacrylate composition.

The botanical adjuvants include bactericides, mammal repellants, fungicides, insect repellants, plant growth regulators, molluscicides, virucides, plant activators, insecticides, nematicides, flexibilisers, fluorescent tags, pigments and combinations thereof.

Bacteriocides may also be included in the cyanoacrylate-based compositions. Bacteriocides include bronopol, copper hydroxide, cresol, dichloropen, dipyrithione, dodicin, fenaminosulf, formaldehyde, hydrargaphen, 8-hydroxyquinoline sulfate, kasugamycin, nitrapyrin, octhilinone, oxolinic acid, oxytetracycline, probenazole, streptomycin, tecloftalam and thiomersal. Mammal repellents may also be included in the cyanoacrylate-based compositions. Mammal repellents include copper naphthenate, Trimethacarb (CAS No. 12407-86-2), zinc naphthenate and Ziram (CAS No. 137-30-4).

Fungicides may also be included in the cyanoacrylate-based compositions, and may be selected from the following groups:
- aliphatic nitrogen fungicides such as butylamine, cymoxanil, dodicin, dodine, and guazatine iminoctadine;
- amide fungicides such as carpropamid, chloraniformethan, cyflufenamid, diclocymet, ethaboxam, fenoxanil, flumetover, furametpyr, mandipropamid, penthiopyrad, prochloraz, prochloraz, quinazamid, silthiofam, and triforine;
- acrylamino acid fungicides such as benalaxyl (benalaxyl-m), furalaxyl, metalaxyl (metalaxyl-m) and pefurazoate;
- anilide fungicides such as benalaxyl (benalaxyl-m), boscalid, carboxin, fenhexamid, metalaxyl (metalaxyl-m), metsulfovax, ofurace, oxadixyl, oxycarboxin, pyracarbolid, thifluzamide, and tiadinil;
- benzanilide fungicides such as benodanil, flutolanil, mebenil, mepronil, salicylanilide and tecloftalam;
- furanilide fungicides such as fenfuram, furalaxyl, furcarbanil and methfuroxam;
- sulfonanilide fungicides such as flusulfamide
- benzamide fungicides such as benzohydroxamic acid, fluopicolide, tioxymid, trichlamide, zarilamid and zoxamide;
- furamide fungicides such as cyclafuramid and furmecyclox;
- phenylsulfamide fungicides such as dichlofluanid and tolylfluanid;
- sulfonamide fungicides such as amisulbrom and cyazofamid;
- valinamide fungicides such as benthiavalicarb and iprovalicarb;
- antiboitic fungicides such as aureofungin, blasticidin-s, cycloheximide, griseofulvin, kasugamycin, natamycin, polyoxins, polyoxorim, streptomycin and validamycin;
- strobilurin fungicides such as azoxystrobin, dimoxystrobin, fluoxastrobin, kresoxim-methyl, metominostrobin, orysastrobin, picoxystrobin, pyraclostrobin, trifloxystrobin, aromatic fungicides, biphenyl, chlorodinitronaphthalene, chloroneb, chlorothalonil, cresol, dicloran, hexachlorobenzene, pentachlorophenol, quintozene, sodium pentachlorophenoxide and tecnazene;
- benzimidazole fungicides such as benomyl, carbendazim, chlorfenazole, cypendazole, debacarb, fuberidazole, mecarbinzid, rabenzazole and thiabendazole;
- benzimidazole precursor fungicides such as furophanate, thiophanate and thiophanate-methyl;
- benzothiazole fungicides such as bentaluron, chlobenthiazone and tcmtb;
- bridge diphenyl fungicides such as bithionol, dichlorophen and diphenylamine;
- carbamate fungicides such as benthiavalicarb, furophanate, iprovalicarb, propamocarb, pyribencarb, thiophanate and thionate-methyl;
- benzimidazolylcarbamate fungicides such as benomyl, carbendazim, cypendazole, debacarb and mecarbinzid;
- carbanilate fungicides such as diethofencarb;
- conazole fungicides (imidazoles) such as climbazole, clotrimazole, imazalil, oxpoconazole, prochloraz, triflumizole and other imidazole fungicides;
- conazole fungicides (triazoles) such as azaconazole, bromuconazole, cyproconazole, diclobutrazol, difenoconazole, diniconazole (diniconazole-m), epoxiconazole, etaconazole, fenbuconazole, fluquinconazole, flusilazole, flutriafol, furconazole (furconazole-cis), hexaconazole, imibenconazole, ipconazole, metconazole, myclobutanil, penconazole, propiconazole, prothioconazole, quinconazole, simeconazole, tebuconazole, tetraconazole, triadimefon, triadimenol, triticonazole, uniconazole (uniconazole-p), and other triazole fungicides;
- copper fungicides such as bordeaux mixture, burgundy mixture, cheshunt mixture, copper acetate, copper carbonate, basic, copper hydroxide, copper naphthenate, copper oleate, copper oxychloride, copper silicate, copper sulfate, copper sulfate, basic, copper zinc chromate, cufraneb, cuprobam, cuprous oxide, mancopper and oxine-copper;
- dicarboximide fungicides such as famoxadone and fluoroimide;
- dichlorophenyl dicarboximide fungicides such as chlozolinate, dichlozoline, iprodione, isovaledione, myclozolin, procymidone and vinclozolin;
- phthalimide fungicides such as captafol, captan, ditalimfox, folpet and thiochlorfenphim;
- dinitrophenol fungicides such as binapacryl, dinobuton, dinocap (dinocap-4, dinocap-6 and meptyldinocap), dinocton, dinopenton, dinosulfon, dinoterbon and dnoc;
- dithiocarbamate fungicides such as azithiram, carbamorph, cufraneb, cuprobam, disulfiram, ferbam, metam, nabam, tecoram, thiram and ziram;
- cyclic dithiocarbamate fungicides such as dazomet, etem and milneb;
- polymeric dithiocarbamate fungicides such as mancopper, mancozeb, maneb, metiram, polycarbamate, propineb and zineb;
- imidazole fungicides such as cyazofamid, fenamidone, fenapanil, glydon, iprodione, isovaledione, pefurazoate, triazoxide and other conazole fungicides (imidazoles);
- inorganic fungicides such as potassium azide, pottasium thiocyanate, sodium azide, sulfur, other copper fungicides and other inorganic mercury fungicides;
- inorganic mercury fungicides such as mercuric chloride, mercuric oxide and mercurous chloride;
- organomercury fungicides such as (3-ethoxypropyl)mercury bromide, ethylmercury acetate, ethylmercury bromide, ethylmercury chloride, ethylmercury 2,3-dihydroxypropyl mercaptide, ethylmercury phosphate, n-(ethylmercury)-p-toluenesulphonanilide, hydrargaphen, 2-methoxyethylmercury chloride, methylmercury benzoate, methylmercury dicyandiamide, methylmercury pentachlorophenoxide, 8-phenylmercurioxyquinoline, phenylmercuriurea, phenylmercury acetate, phenylmercury chloride, phenylmercury derivative of pyrocatechol, phenylmercury nitrate, phenylmercury salicylate, thiomersal and tolylmercury acetate;
- morpholine fungicides such as aldimorph, benzamorf, carbamorph, dimethomorph, dodemorph, fenpropimorph, flumorph and tridemorph;
- organophosphorus fungicides such as ampropylfos, ditalimfos, edifenphos, fosetyl, hexylthiofos, iprobenfos, phosdiphen, pyrazophos, tolclofos-methyl and triamiphos;
- organotin fungicides such as decafentin, fentin and tributyltin oxide;
- oxathiin fungicides such as carboxin and oxycarboxin;
- oxazole fungicides such as chlozolinate, dichlozoline, drazoxolon, famoxadone, hymexazol, metazoxolon, myclozolin, oxadixyl and vinclozolin;
- polysulfide fungicides such as barium polysulfide, calcium polysulfide, potassium polysulfide and sodium polysulfide;
- pyrazole fungicides such as furametpyr and penthiopyrad;
- pyridine fungicides such as boscalid, uthiobate, dipyrithione, fluazinam, fluopicolide, pyribencarb, pyridinitril, pyrifenox, pyroxychlor and pyroxyfur;
- pyrimidine fungicides such as bupirimate, cyprodinil, diflumetorim, dimethirimol, ethirimol, fenarimol, ferimzone, mepanipyrim, nuarimol, pyrimethanil and triarimol;
- pyrrole fungicides such as fenpiclonil, fludioxonil and fluoroimide;
- quinoline fungicides such as ethoxyquin, halacrinate, 8-hydroxyquinoline sulfate, quinacetol and quinoxyfen;
- quinone fungicides such as benquinox, chloranil, dichlone and dithianon;
- quinoxaline fungicides such as chinomethionat, chlorquinox and thioquinox;
- thiazole fungicides such as ethaboxam, etridiazole, metsulfovax, octhilinone, thiabendazole, thiadifluor and thifluzamide;
- thiocarbamate fungicides such as methasulfocarb and prothiocarb;
- thiophene fungicides such as ethaboxam and silthiofam;
- triazine fungicides such as anilazine;
- triazole fungicides such as amisulbrom, bitertanol, fluotrimazole, triazbutil and other conazole fungicides (such as triazoles);
- urea fungicides such as bentaluron, pencycuron and quinazamid; and
- unclassified fungicides such as acibenzolar, acypetacs, allyl alcohol, benzalkonium chloride, benzamacril, bethoxazin, carvone, chloropicrin, dbcp, dehydroacetic acid, diclomezine, diethyl pyrocarbonate, fenaminosulf, fenitropan, fenpropidin, formaldehyde, furfural, hexachlorobutadiene, iodomethane, isoprothiolane, methyl bromide, methyl isothiocyanate, metrafenone, nitrostyrene, nitrothal-isopropyl, och, 2-phenylphenol, phthalide, piperalin, probenazole, proquinazid, pyroquilon, sodium orthophenylphenoxide, spiroxamine, sultropen, thicyofen, tricyclazole and zinc naphthenate;

Insect repellants may also be included in the cyanoacrylate-based compositions. Insect repellants include butopyronoxyl, dibutyl phthalate, diethyltoluamide, dimethyl carbate, dimethyl phthalate, ethohexadiol, hexamide, icaridin, methoquin-butyl, methylneodecanamide and oxamate.

Plant growth regulators may also be included in the cyanoacrylate-based compositions. Plant growth regulators may be selected from the following groups:
- auxins such as 4-cpa, 2,4-d, 2,4-db, 2,4-dep, dichlorprop, fenoprop, iaa, iba, naphthaleneacetamide, α-naphthaleneacetic acid, 1-naphthol, naphthoxyacetic acid, potassium naphthenate, sodium naphthenate and 2,4,5-t ;
- cytokinins such as 2ip, benzyladenine, kinetin and zeatin;
- gibberellins such as gibberellins and gibberellic acid;
- growth inhibitors such as abscisic acid, ancymidol, butralin, carbaryl, chlorphonium, chlorpropham, dikegulac, flumetralin, fluoridamid, fosamine, glyphosine, isopyrimol, jasmonic acid, maleic hydrazide, mepiquat, piproctanyl, prohydrojasmon, propham and 2,3,5-tri-iodobenzoic acid;
- morphactins such as chlorfluren, chlorflurenol, dichlorflurenol and flurenol;
- growth stimulators such as brassinolide, forchlorfenuron and hymexazol;
- ethylene inhibitorssuch as aviglycine and 1-methylcyclopropene;
- ethylene releasers such as acc, etacelasil, ethephon and glyoxime;
- unclassified plant growth regulators such as benzofluor, buminafos, carvone, ciobutide, clofencet, cloxyfonac, cyclanilide, cycloheximide, epocholeone, ethychlozate, ethylene, fenridazon, heptopargil, holosulf, inabenfide, karetazan, lead arsenate, methasulfocarb, prohexadione, pydanon, sintofen, triapenthenol and trinexapac.

Growth retardants such as chlormequat, daminozide, flurprimidol, mefluidide, paclobutrazol, tetcyclacis and uniconazole may also be included in the cyanoacrylate-based compositions. Use of such growth retardants could slow the growth rate of some batches of grafted material to allow for sequential cropping, i.e., one could graft the entirety to be grafted at one period of time and allow for staged growth over a period of time, thereby avoiding a "glut".

Molluscicides may also be included in the cyanoacrylate-based compositions. Molluscicides include bromoacetamide, clacium arsenate, cloethocarb, copper acetoarsenite, copper sulfate, Fentin (CAS No. 668-34-8), metaldehyde, methiocarb, niclosamide, pentachlorophenol, sodium pentachlorophenoxide, Tazimcarb (CAS No. 40085-57-2), Thiodicarb (CAS No. 59669-26-0), tributyltin oxide, Trifenmorph (CAS No. 1420-06-0), and Trimethacarb (CAS No. 12407-86-2).

Virucides such as imani and ribavirin may also be included in the cyanoacrylate-based compositions.

Plant activators such as acibenzolar and probenazole may also be included in the cyanoacrylate-based compositions.

Insecticides may also be included in the cyanoacrylate-based compositions. Insecticides include antibiotic insecticides, allosamidin, thuringiensin, macrocyclic lactone insecticides, avermectin insecticides, abamectin, doramectin, emamectin, eprinomectin, ivermectin, selamectin, milbemycin insecticides, lepimectin, milbemectin, milbemycin oxime, moxidectin, spinosyn insecticides, spinosad, arsenical insecticides, calcium arsenate, copper acetoarsenite, copper arsenate, lead arsenate, potassium arsenite, sodium arsenite, botanical insecticides, anabasine, azadirachtin, d-limonene, nicotine, pyrethrins, cinerins, cinerin i, cinerin ii, jasmolin i, jasmolin ii, pyrethrin i, pyrethrin ii, quassia, rotenone, ryania, sabadilla, carbamate insecticides, bendiocarb, carbaryl, benzofuranyl methylcarbamate insecticides, benfuracarb, Carbofuran (CAS NO. 426008-5g 37.50), carbosulfan, decarbofuran, furathiocarb, dimethylcarbamate insecticides, dimetan, dimetilan, hyquincarb, pirimicarb, oxime carbamate insecticides, alanycarb, aldicarb, aldoxycarb, butocarboxim, butoxycarboxim, methomyl, nitrilacarb, oxamyl, tazimcarb, thiocarboxime, thiodicarb, thiofanox, phenyl methylcarbamate insecticides, allyxycarb, aminocarb, bufencarb, butacarb, carbanolate, cloethocarb, dicresyl, dioxacarb, empc, ethiofencarb, fenethacarb, fenobucarb, isoprocarb, methiocarb, metolcarb, mexacarbate, promacyl, promecarb, propoxur, trimethacarb, xmc, xylylcarb, desiccant insecticides, boric acid, diatomaceous earth, silica gel, dinitrophenol insecticides, dinex, dinoprop, dinosam, dnoc, fluorine insecticides, barium hexafluorosilicate, cryolite, sodium fluoride, sodium hexafluorosilicate, sulfluramid, formamidine insecticides, amitraz, chlordimeform, formetanate, formparanate, fumigant insecticides, acrylonitrile, carbon disulfide, carbon tetrachloride, chloroform, chloropicrin, paradichlorobenzene, 1,2-dichloropropane, ethyl formate, ethylene dibromide, ethylene dichloride, ethylene oxide, hydrogen cyanide, iodomethane, methyl bromide, methylchloroform, methylene chloride, naphthalene, phosphine, sulfuryl fluoride, tetrachloroethane, inorganic insecticides, borax, boric acid, calcium polysulfide, copper oleate, diatomaceous earth, mercurous chloride, potassium thiocyanate, silica gel, sodium thiocyanate, arsenical insecticides, fluorine insecticides, insect growth regulators, chitin synthesis inhibitors, bistrifluron, buprofezin, chlorfluazuron, cyromazine, diflubenzuron, flucycloxuron, flufenoxuron, hexaflumuron, lufenuron, novaluron, noviflumuron, penfluron, teflubenzuron, triflumuron, juvenile hormone mimics, epofenonane, fenoxycarb, hydroprene, kinoprene, methoprene, pyriproxyfen, triprene, juvenile hormones, juvenile hormone i, juvenile hormone ii, juvenile hormone iii, moulting hormone agonists, chromafenozide, halofenozide, methoxyfenozide, tebufenozide, moulting hormones, a-ecdysone, ecdysterone, moulting inhibitors, diofenolan, precocenes, precocene i, precocene ii, precocene iii, unclassified insect growth regulators, dicyclanil, nereistoxin analogue insecticides, bensultap, cartap, thiocyclam, thiosultap, nicotinoid insecticides, flonicamid, nitroguanidine insecticides, clothianidin, dinotefuran, imidacloprid, thiamethoxam, nitromethylene insecticides, nitenpyram, nithiazine, pyridylmethylamine insecticides, acetamiprid, imidacloprid, nitenpyram, thiacloprid, organochlorine insecticides, bromo-ddt, camphechlor, ddt, pp'-ddt, ethyl-ddd, hch, gamma-hch, lindane, methoxychlor, pentachlorophenol, tde, cyclodiene insecticides, aldrin, bromocyclen, chlorbicyclen, chlordane, chlordecone, dieldrin, dilor, endosulfan, endrin, heod, heptachlor, hhdn, isobenzan, isodrin, kelevan, mirex, organophosphorus insecticides, organophosphate insecticides, bromfenvinfos, chlorfenvinphos, crotoxyphos, dichlorvos, dicrotophos, dimethylvinphos, fospirate, heptenophos, methocrotophos, mevinphos, monocrotophos, naled, naftalofos, phosphamidon, propaphos, tepp, tetrachlorvinphos, organothiophosphate insecticides, dioxabenzofos, fosmethilan, phenthoate, aliphatic organothiophosphate insecticides, acethion, amiton, cadusafos, chlorethoxyfos, chlormephos, demephion, demephion-o, demephion-s, demeton, demeton-o, demeton-s, demeton-methyl, demeton-o-methyl, demeton-s-methyl, demeton-s-methylsulphon, disulfoton, ethion, ethoprophos, ipsp, isothioate, malathion, methacrifos, oxydemeton-methyl, oxydeprofos, oxydisulfoton, phorate, sulfotep, terbufos, thiometon, aliphatic amide organothiophosphate insecticides, amidithion, cyanthoate, dimethoate, ethoate-methyl, formothion, mecarbam, omethoate, prothoate, sophamide, vamidothion, oxime organothiophosphate insecticides, chlorphoxim, phoxim, phoxim-methyl, heterocyclic, organothiophosphate insecticides, azamethiphos, coumaphos, coumithoate, dioxathion, endothion, menazon, morphothion, phosalone, pyraclofos, pyridaphenthion, quinothion, benzothiopyran organothiophosphate insecticides, azinphos-ethyl, azinphosmethyl, isoindole organothiophosphate insecticides, dialifos, phosmet, isoxazole organothiophosphate insecticides, isoxathion, zolaprofos, pyrazolopyrimidine organothiophosphate insecticides, chlorprazophos, pyrazophos, pyridine organothiophosphate insecticides, chlorpyrifos, chlorpyrifos-methyl, pyrimidine organothiophosphate insecticides, butathiofos, diazinon, etrimfos, lirimfos, pirimiphos-ethyl, pirimiphos-methyl, primidophos, pyrimitate, tebupirimfos, quinoxaline organothiophosphate insecticides, quinalphos, quinalphos-methyl, thiadiazole organothiophosphate insecticides, athidathion, lythidathion, methidathion, prothidathion, triazole organothiophosphate insecticides, isazofos, triazophos, phenyl organothiophosphate insecticides, azothoate, bromophos, bromophos-ethyl, carbophenothion, chlorthiophos, cyanophos, cythioate, dicapthon, dichlofenthion, etaphos, famphur, fenchlorphos, fenitrothion, fensulfothion, fenthion, fenthion-ethyl, heterophos, jodfenphos, mesulfenfos, parathion, parathion-methyl, phenkapton, phosnichlor, profenofos, prothiofos, sulprofos, temephos, trichlormetaphos-3, trifenofos, phosphonate insecticides, butonate, trichlorfon, phosphonothioate insecticides, mecarphon, phenyl ethylphosphonothioate insecticides, fonofos, trichloronat, phenyl phenylphosphonothioate insecticides, cyanofenphos, epn, leptophos, phosphoramidate insecticides, crufomate, fenamiphos, fosthietan, mephosfolan, phosfolan, pirimetaphos, phosphoramidothioate insecticides, acephate, isocarbophos, isofenphos, methamidophos, propetamphos, phosphorodiamide insecticides, dimefox, mazidox, mipafox, schradan, oxadiazine insecticides, indoxacarb, oxadiazolone insecticides, metoxadiazone, phthalimide insecticides, dialifos, phosmet, tetramethrin, pyrazole insecticides, acetoprole, ethiprole, fipronil, pyraclofos, pyrafluprole, pyriprole, tebufenpyrad, tolfenpyrad, vaniliprole, pyrethroid insecticides, pyrethroid ester insecticides, acrinathrin, allethrin (bioallethrin), barthrin, bifenthrin, bioethanomethrin, cyclethrin, cycloprothrin, cyfluthrin, beta-cyfluthrin, cyhalothrin, gamma-cyhalothrin, lambda-cyhalothrin, cypermethrin, alpha-cypermethrin, beta-cypermethrin, theta-cypermethrin, zeta-cypermethrin, cyphenothrin, deltamethrin, dimefluthrin, dimethrin, empenthrin, fenfluthrin, fenpirithrin, fenpropathrin, fenvalerate, esfenvalerate, flucythrinate, fluvalinate, tau-fluvalinate, furethrin, imiprothrin, metofluthrin, permethrin, biopermethrin, transpermethrin, phenothrin, prallethrin, profluthrin, pyresmethrin, resmethrin, bioresmethrin, cismethrin, tefluthrin, terallethrin, tetramethrin, tralomethrin, transfluthrin, pyrethroid ether insecticides, etofenprox, flufenprox, halfenprox, protrifenbute, silafluofen, pyrimidinamine insecticides, flufenerim, pyrimidifen, pyrrole insecticides, chlorfenapyr, tetronic acid insecticides, spiromesifen, spirotetramat, thiourea insecticides, diafenthiuron, and urea insecticides such as flucofuron, sulcofuron, see also chitin synthesis inhibitors, unclassified insecticides, closantel, crotamiton, exd, fenazaflor, fenoxacrim, flubendiamide, hydramethylnon, isoprothiolane, malonoben, metaflumizone, nifluridide, pyridaben, pyridalyl, rafoxanide, triarathene and triazamate.

Nematicides, which may also be used in the cyanoacrylate compositions. Nematicides may be selected from the following groups:
- antibiotic nematicides such as abamectin, carbamate nematicides, benomyl, carbofuran, carbosulfan and cloethocarb;
- oxime carbamate nematicides such as alanycarb, aldicarb, aldoxycarb and oxamyl;
- organophosphorus nematicides
- organophosphate nematicides such as diamidafos, fenamiphos, fosthietan and phosphamidon;
- organothiophosphate nematicides such as cadusafos, chlorpyrifos, dichlofenthion, dimethoate, ethoprophos, fensulfothion, fosthiazate, heterophos, isamidofos, isazofos, phorate, phosphocarb, terbufos, thionazin and triazophos;
- phosphonothioate nematicides such as mecarphon
- unclassified nematicides such as acetoprole, benclothiaz, chloropicrin, dazomet, dbcp, dcip, 1,2-dichloropropane, 1,3-dichloropropene, furfural, iodomethane, metam, methyl bromide, methyl isothiocyanate and xylenols.

Fluorescent tags may also be included in the cyanoacrylate compositions. Fluorescent tags include fluorescin..

Pigments may also be included in the cyanoacrylate compositions. Pigments include acid dyes and colorants.

Natural oil extracts from plants, such as at least one liquid or solid fat selected from camelia oil, mango oil, rice wax, avocado oil, magnolia oil, carnuaba wax, olive oil, apricot kernal oil, borage oil, canola oil, evening primrose oil, grape seed oil, hemp seed oil, jojoba oil, kiwi fruit oil, borage oil, kukui nut oil, macademia nut oil, pistachio nut oil, rose hip oil, safflower oil, sesame seed oil, sunflower oil, sweet almond oil, tea tree oil, walnut oil and wheat germ oil, may also be used in the inventive cyanoacrylate compositions.

Radiaton curable cyanoacrylates provide in aaddition the cyanoacrylate monomer, a metallocene component and a photoinitiator. metallocenes within structure **I:** 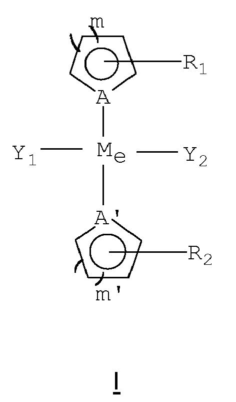 where R₁ and R₂ may be the same or different and may occur at least once and up to as many four times on each ring in the event of a five-membered ring and up to as many as five times on each ring in the event of a six-membered ring;

R₁ and R₂ may be selected from H; any straight- or branched-chain alkyl constituent having from 1 to about 8 carbon atoms, such as CH₃, CH₂CH₃, CH₂CH₂CH₃, CH(CH₃)₂, C(CH₃)₃ or the like; acetyl; vinyl; allyl; hydroxyl; carboxyl; -(CH₂)ₙ-OH, where n may be an integer in the range of 1 to about 8; - (CH₂)ₙ-COOR₃, where n may be an integer in the range of 1 to about 8 and R₃ may be any straight- or branched-chain alkyl constituent having from 1 to about 8 carbon atoms; H; Li; Na; or -(CH₂)_{n'}, where n' may be an integer in the range of 2 to about 8; -(CH₂)ₙ-OR₄, wherein n may be an integer in the range of 1 to about 8 and R₄ may be any straight- or branched-chain alkyl constituent having from 1 to about 8 carbon atoms; or -(CH₂)ₙ-N⁺(CH₃)₃ X⁻, where n may be an integer in the range of 1 to about 8 and X may be Cl⁻, Br⁻, I⁻, ClO₄⁻ or BF₄⁻;
Y₁ and Y₂ may not be present at all, but when at least one is present they may be the same or different and may be selected from H, Cl⁻, Br⁻, I⁻, cyano, methoxy, acetyl, hydroxy, nitro, trialkylamines, triaryamines, trialkylphospines, triphenylamine, tosyl and the like;
A and A' may be the same or different and may be C or N;
m and m' may be the same or different and may be 1 or 2; and
Mₑ is Fe, Ti, Ru, Co, Ni, Cr, Cu, Mn, Pd, Ag, Rh, Pt, Zr, Hf, Nb, V, Mo and the like.

Of course, depending on valence state, the element represented by Mₑ may have additional ligands -- Y₁ and Y₂ -- associated therewith beyond the carbocyclic ligands depicted above (such as where Mₑ is Ti and Y₁ and Y₂ are Cl⁻).

Alternatively, metallocene structure **I** may be modified to include materials such as: 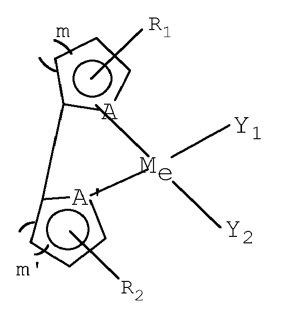 where R₁, R₂, Y₁, Y₂, A, A', m, m' and Mₑ are as defined above. A particularly desirable example of such a material is where R₁ and R₂ are each H; Y₁ and Y₂ are each Cl; A and A' are each N; m and m' are each 2 and Mₑ is Ru.

Within metallocene structure **I**, well-suited metallocene materials may be chosen from within metallocene structure **II**: 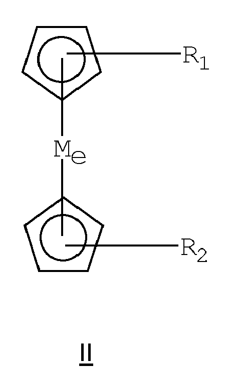 where R₁, R₂ and Mₑ are as defined above.

Particularly well-suited metallocene materials from within structure I may be chosen where R₁, R₂, Y₁, Y₂, m and m' are as defined above, and Mₑ is chosen from Ti, Cr, Cu, Mn, Ag, Zr, Hf, Nb, V and Mo.

Desirably, the metallocene is selected from ferrocenes (i.e., where Mₑ is Fe), such as ferrocene, vinyl ferrocenes, ferrocene derivatives, such as butyl ferrocenes or diarylphosphino metal-complexed ferrocenes [e.g., 1,1-bis (diphenylphosphino) ferrocene-palladium dichloride], titanocenes (i.e., where Mₑ is Ti), such as bis( ⁵-2,4-cyclopentadien-1-yl)-bis-[2,6-difluoro-3- (1H-pyrrol-1-yl)phenyl] titanium which is available commercially from Ciba-Geigy Corporation, Tarrytown, New York under the tradename "IRGACURE" 784DC, and derivatives and combinations thereof. A particularly desirable metallocene is ferrocene. And bis-alkylmetallocenes, for instance, bis-alkylferrocenes (such as diferrocenyl ethane, propanes, butanes and the like) are also desirable for use herein, particularly since about half of the equivalent weight of the material (as compared to a non-bis-metallocene) may be employed to obtain the sought-after results, all else being unchanged. Of the these materials, diferrocenyl ethane is particularly desirable.

Of course, other materials may be well-suited for use as the metallocene component. For instance, Mₑ[CW₃-CO-CH=C(O⁻)-CW'₃]₂, where Mₑ is as defined above, and W and W' may be the same or different and may be selected from H, and halogens, such as F and Cl. Examples of such materials include platinum (II) acetyl acetonate ("PtACAC"), cobalt (II) acetyl acetonate ("CoACAC"), nickel (II) acetyl acetonate ("NiACAC") and copper (II) acetyl acetonate ("CuACAC"). Combinations of those materials may also be employed.

A number of photoinitiators may be employed herein to provide the benefits and advantages of the present invention to which reference is made above. Photoinitiators enhance the rapidity of the curing process when the photocurable compositions as a whole are exposed to electromagnetic radiation. Certain metallocenes, such as "IRGACURE" 784DC, may serve a dual purpose as both metallocene and photoinitiator.

Examples of suitable photointiators for use herein include, but are not limited to, photoinitiators available commercially from Ciba-Geigy Corp., Tarrytown, New York under the "IRGACURE" and "DAROCUR" tradenames, specifically "IRGACURE" 184 (1-hydroxycyclohexyl phenyl ketone), 907 (2-methyl-1-[4-(methylthio)phenyl]-2-morpholino propan-1-one), 369 (2-benzyl-2-N,N-dimethylamino-1-(4-morpholinophenyl)-1-butanone), 500 (the combination of 1-hydroxy cyclohexyl phenyl ketone and benzophenone), 651 (2,2-dimethoxy-2-phenyl acetophenone), 1700 (the combination of bis(2,6-dimethoxybenzoyl-2,4-,4-trimethyl pentyl) phosphine oxide and 2-hydroxy-2-methyl-1-phenyl-propan-1-one), and 819 [bis(2,4,6-trimethyl benzoyl) phenyl phosphine oxide] and "DAROCUR" 1173 (2-hydroxy-2-methyl-1-phenyl-1-propane) and 4265 (the combination of 2,4,6-trimethylbenzoyldiphenyl-phosphine oxide and 2-hydroxy-2-methyl-1-phenyl-propan-1-one); and the visible light [blue] photoinitiators, dl-camphorquinone and "IRGACURE" 784DC. Of course, combinations of these materials may also be employed herein.

Other photoinitiators useful herein include alkyl pyruvates, such as methyl, ethyl, propyl, and butyl pyruvates, and aryl pyruvates, such as phenyl, benzyl, and appropriately substituted derivatives thereof.

Photoinitiators particularly well-suited for use herein include ultraviolet photoinitiators, such as 2,2-dimethoxy-2-phenyl acetophenone (e.g., "IRGACURE" 651), and 2-hydroxy-2-methyl-1-phenyl-1-propane (e.g., "DAROCUR" 1173), bis(2,4,6-trimethyl benzoyl) phenyl phosphine oxide (e.g., "IRGACURE" 819), and the ultraviolet/visible photoinitiator combination of bis(2,6-dimethoxybenzoyl-2,4,4-trimethylpentyl) phosphine oxide and 2-hydroxy-2-methyl-1-phenyl-propan-1-one (e.g., "IRGACURE" 1700), as well as the visible photoinitiator bis( ⁵-2,4-cyclopentadien-1-yl)-bis[2,6-difluoro-3-(1H-pyrrol-1-yl)phenyl]titanium (e.g., "IRGACURE" 784DC).

The curing reaction is exothermic. Preferably, the adhesive is therefore cooled during curing:
- As the adhesive used is a light curing adhesive, the curing tool used is a UV-Light Emitting Diode (LED) (Product LOCTITE^{®} 7700 or 97059).
- Preferably, the UV light is filtered in order to obtain cool UV light or it is monochromatic light from a LED source, i.e. UV light without components of radiation which would heat up the adhesive when absorbed.
- The distance between the light and the wound is between 1 mm and 15 cm.
- Experiments have shown that 20µg of adhesive applied to the plant, and cured with -+UV-LED (Product LOCTITE^{®} 7700 or 97059) heat up locally up to 160°C. By spraying water, the temperature can be kept at 35°C, avoiding damage to the plants. The water is sprayed at the same time the UV or visible light is applied to the sample.
- Temperature-regulating microspheres added to the formulation can also be used.
- The time of curing is below 5 or even 2 seconds.

The external conditions such as temperature, humidity, light, etc. where the plant is exposed just after being grafted should preferably be controlled, in order to provide the plant the best atmosphere for a healthy grow. Just immediately after grafted, the plant is preferably placed in a humidity cabinet within a few seconds. Then the plants are brought as soon as possible to a climate chamber with the following controlled conditions:
- Temperature: 21 °C
- Light: 8-10 klx
- 80% - 100% relative humidity

Suitable fast-curing adhesives are the following LOCTITE^{®} products: **4305-UV-CA, 4308 UV-CA and 4307 UV-CA.**

These UV curable CA adhesives are also available as foam including 40 ml adhesive, 1,2 g stabilizer 8002 and 5 g propellant (2,5 g propane-butane + 2,5 g dimethylether)

The following parameters may be relevant:

| Parameter | Broadest range | Preferred range |
|---|---|---|
| Dispense time of CA adhesive | 0.1 - 2 s | 0.4 - 0.6 s |
| UV irradation time | 0.2 -10 s | 1 - 2 s |
| Spraying time of water aerosol | 0.2 - 20 s | 1 - 4 s |
| Fixture time by mechanical clamps | 0.5 - 20 s | 2 - 5 s |
| Wavelength for light curing | 200 - 500 nm | 350 - 450 nm |
| Amount of adhesive per graft | CA: 5 µl - 120 µl | CA: 10 - 50 µl |

The following advantages are obtained by the invention:
- The grafting method of the invention is very fast (grafting time below 5 or even 2 seconds).
- The method is fully compatible to automation and the fast light curing adhesive is also compatible with modern grafting robots.
- The adhesive acts as a sealant for the wounded part. It prevents diseases or pathogens to enter the wound and infect the plant.
- The adhesive is biodegradable, it disappears after few weeks and doesn't cause any waste.
- The method is compatible to all kind of plants and all varieties, so at the same time, compatible to all methods of grafting (budding, cothyledon graft, etc).
- In the case that rootstock and scion have different diameters, the adhesive can be used as a sealant. There is no need for different sizes of clips.
- The adhesive facilitates the work of the nursery because it replaces the clips of different sizes with a single product.
- The use of this method allows saving time for the cleaning or recollection of clips, rubber bands, patches, etc.
- There is the possibility to include disinfectants, hormones or biologically active substances that help minimizing the stress of freshly grafted plants.

In recent years, a bacterial disease, called bacterial canker, has become a serious problem in commercial and small garden plantings. This disease can cause lesions or cankers on any portion of the plant, including the fruit, or may result in a general wilt or decline of the plant. The disease is caused by the bacterium Clavibacter michiganensis. A further advantage of the present invention resides in that the intersection of the rootstock and the scion is protected by the adhesive against infection by that bacterium.

The method of the invention is applicable in particular for the top grafting of young plants including fruit trees, decoration trees and all graftable cut-flower and pot flower species.

The method of the invention is basically compatible with all existing methods of grafting both industrially (nurseries etc) and in the hobby market (do it yourself, bonsais etc...) and to all types of vegetable plants, where grafting is possible, including young trees, older trees, flowers, salads, vegetables etc...). Presently there are different methods of grafting plants which are known since half a century. In all cases this process involves the insertion or the tight contact of the cells and vessels of one plant with the cells and vessels of another plant.

Either with budding (like with roses) or with the rootstock and scion approach (like tomatoes and cucumbers and young olive trees), the part of the plant which has been damaged, needs to be protected from the external environment. In the case of budding roses for example, the adhesive is dispensed manually on the part where the eye has been inserted under the bark of the rootstock, and this seals the wound, and prevents diseases and parasites to damage the plant. Historically this was done and is still currently done with rubber patches or sealing tapes (butyl rubber tapes, duck tape, electric tape or similar)

The stem diameters of the rootstock and the scion can differ strongly. Preferably they are however selected to be identical. The invention is usable in particular with machines which select the plants to be grafted as to their stem diameters.

Embodiments of the invention are shown by way of examples in the accompanying drawings, wherein:
Figs. 1 to 4 show the stages of the method of the invention;
Fig. 5 shows the apparatus for carrying out the grafting method;
Fig. 6 shows the apparatus of Fig. 5 after cutting the rootstock and the scion;
Fig. 7 shows the apparatus of Fig. 6 in a slanted top view;
Fig. 8 shows the tweezers in more detail.
Fig. 9 shows the dispense nozzle, the cure head and the spray nozzle before the application of the fast curing adhesive;
Fig. 10 shows the arrangement of Fig. 9 at the application of the fast curing adhesive;
Fig. 11 shows the arrangement of Fig. 9 with the dispense nozzle partially retracted immediately after the application of the fast curing adhesive;
Fig. 12 shows the arrangement of Fig. 9 with the dispense nozzle completely retracted after the application of the fast curing adhesive;
Fig. 13 shows the arrangement of Fig. 9 with the the cure head and the spray nozzle in their extended position; and
Fig. 14 shows the arrangement of Fig. 9 when the grafting procedure is completed.

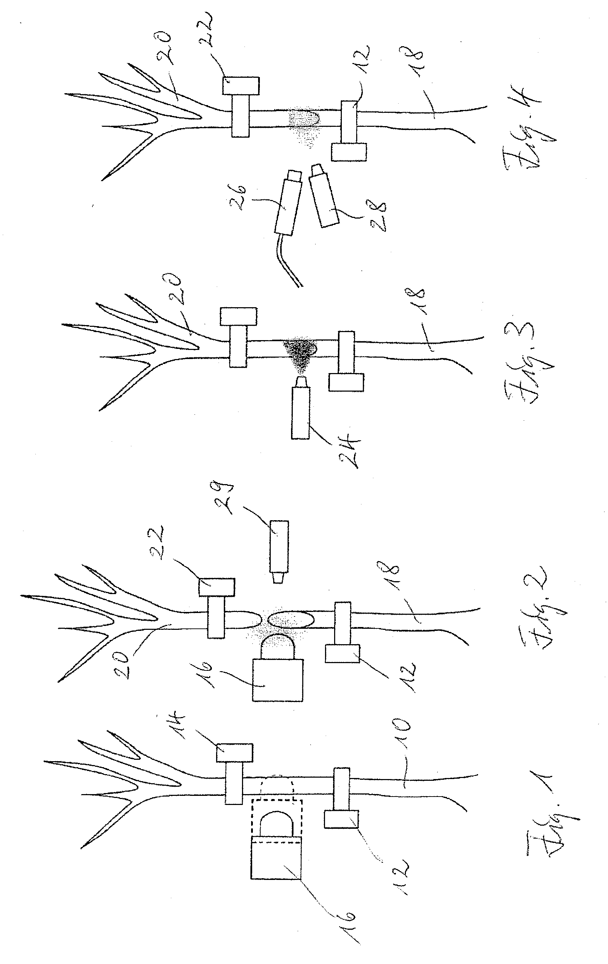

Figs. 1 to 4 show the grafting of a tomato plant. Fig. 1 shows a stem 10 of a tomato plant of 2 mm diameter. The stem 10 of the tomato plant is clamped by two vertically spaced lower and upper mechanical clamps 12, 14. The stem 10 is cut midway between the lower and upper clamps 12, 14 using a sterilized blade 16. The upper clamp is carried by a first slider (not shown) driven by pneumatic, hydraulic or electric forces. The cut upper portion of the tomato plant is removed by the upper clamp 12 by means of the first slider leaving a rootstock 18 of the tomato plant. The removed upper portion is replaced by the upper portion of another plant, the scion 20, which has been cut in the same way from another tomato plant and is clamped in a further mechanical clamp 22. The further clamp 22 is mounted on a second slider driven by pneumatic force. The second slider transports the clamp 22 holding the scion 20 first to the position shown in Fig. 2, where the scion 20 is vertically aligned with the rootstock 18, and then moves the clamp 22 with the scion 20 from the position of Fig. 2 vertically downward into the position shown in Fig. 3. Once in that position, the root stock 18 and the scion 20 are gently pressed together at the cut intersection. A third slider holding a dispense nozzle 24 moves forward with the dispense nozzle tip getting very close to the intersection (distance about 0.3 mm). Dispensing of UV-CA Loctite^{®} 4305 adhesive then takes place with a dispensing time period of about 0.5 s. After dispensing the third slider carrying the dispense nozzle 30 retracts, and a forth slider carrying a UV LED cure head 26 and an air-assisted water spray nozzle 28 moves close to the plant (distance about 15 mm) as shown in Fig. 4. First air-spraying of water starts and then, after 1 s, irradiation by UV light. Irradiation lasts about 4 s. Air-assisted water spraying keeps on going and spreads the CA adhesive around the stem. After a total cure time of about 4 s the grafted plant has achieved handling strength.

As shown in Fig. 2, the blade 16 and the cut surfaces of the rootstock 18 and the scion 20 are disinfected by a further nozzle 29 spraying a disinfectant. That disinfecting step can take place at any time between cutting the stems and applying the adhesive.

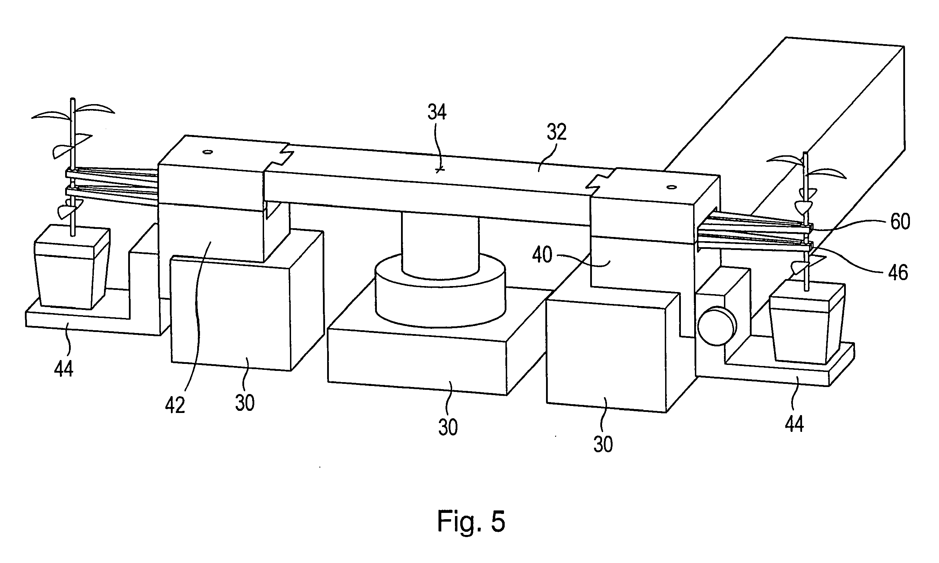

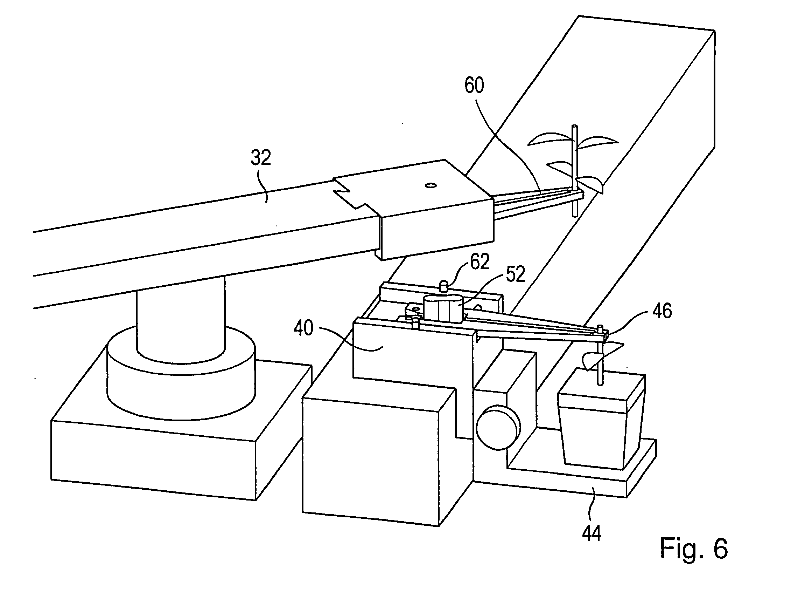

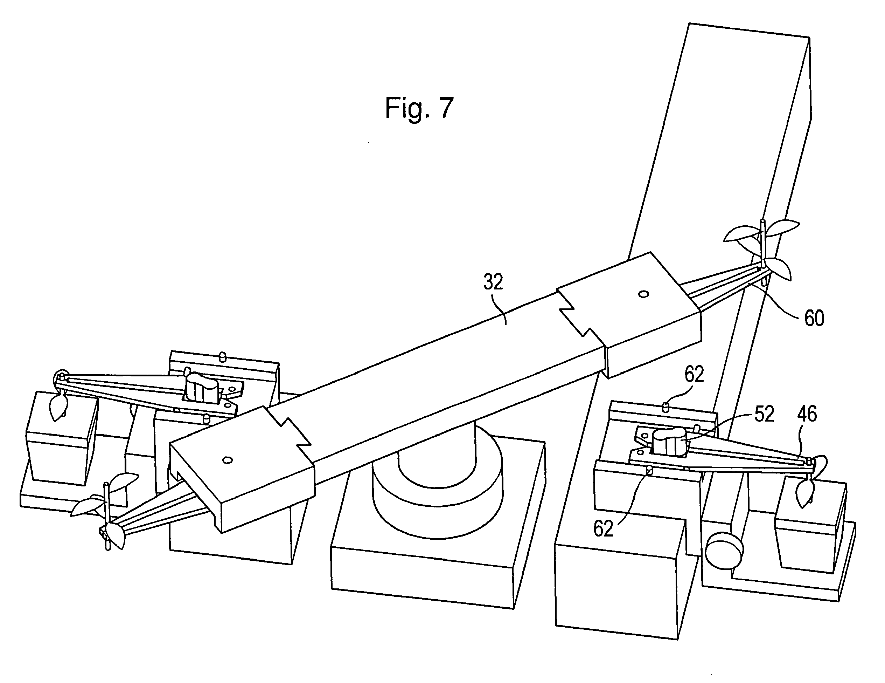

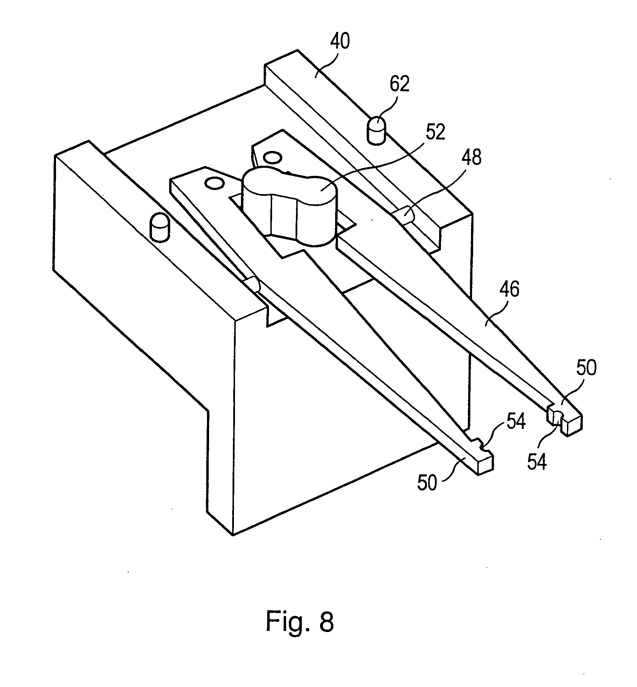

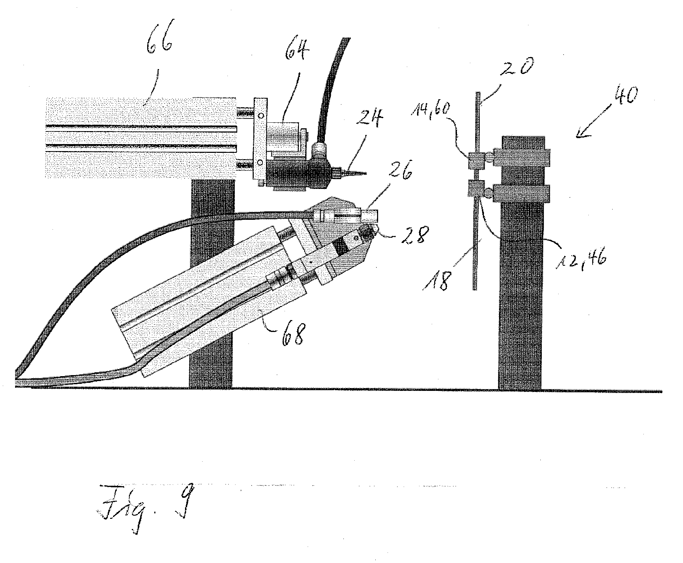

Fig. 5 to 14 show an apparatus for carrying out the grafting of seedlings in a largely automatic manner. Figs. 5 to 8 show a first part of the apparatus for obtaining the rootstock and the scion and bringing them together, i.e the clamps and the associated sliders of Figs. 1 to 4, while Figures 9 to 14 show a second part of the apparatus which includes the dispense nozzle, the cure head and the spray nozzle, which second part is to be implemented into the first part of the apparatus.

The first part of the apparatus comprises a basis 30 on which a horizontal arm 32 is pivoted with the pivot midway of the arm 32. The pivot bearing is adapted also to lift the arm 32 by some centimeters. The arm 32 can be turned through 180° from a first position to a second position.

The first part of the apparatus comprises further a first and a second plant holder 40, 42 which are mounted diametrically opposite with respect to the pivot point 34 of the arm 32. Each plant holder 40, 42 includes a horizontal small plant support 44 which can be manually raised and lowered. The lateral ends of the arm 32 are located at the plant holders 40, 42 in the first and second rotational position of the arm 32.

The lower clamp 12 of the embodiment of Fig. 1 to 4 is implemented as a first tweezers 46 which is mounted at the first plant holder 40. A similar first tweezers 46 is also mounted at the second plant holder 42. The center lines of the first tweezers 46 are radial to the pivot point 34. Their rear ends are oriented towards the pivot point 34. Springs 48 keep the first tweezers 46 normally closed. The first tweezers 46 can be opened at their forward ends or tips 50 by an eccentric 52 arranged between the tweezers legs. The first tweezers 46 are arranged such that their tips 50 are above the center of the plant supports 44. Semi-circular recesses 54 are cut at the tips 50 so that a plant stem 10 of two or three millimeters diameter can be clamped within the recesses 54.

The upper and further clamps 14, 22 of the embodiment of Fig. 1 to 4 are implemented as second tweezers 60 which are provided at the ends of the arm 32 at the bottom side thereof. The arm 32 functions therefore as the first and second slider of the embodiment of Figs. 1 to 4. The second tweezers 60 are designed and oriented similarly to the first tweezers 46. The tips of the second tweezers extend outwards form the end of the arm 32. The semi-circular recesses 54 of the first tweezers 46 are in vertical alignment with the semi-circular recesses 54 of the second tweezers 60 in the first position of the arm 32 as well as in the second position of the arm 32 in which the arm 32 has rotated through 180° from the first position. From each plant holder 40, 42 extend short vertical pins 62 which immerse into bores at the ends of the arm 32 when the arm 32 is lowered after having been rotated into its first or second rotational position. The pins 62 and bores serve for positioning the arm 32 precisely with respect to the plant holders 40, 42. The first and second tweezers 46, 60 register vertically in these positions. The eccentrics 52 which are pivoted at the plant holders 40, 42 have a vertical extension of slightly more than the vertical distance between the first and second tweezers 46, 60 so that the eccentrics 52 mounted at the plant holder 40, 42 act also on the second tweezers 60 mounted at the ends of the arm 32. The vertical distance of the first and second tweezers 46, 60 is in the range of 2 to 4 centimeter when the arm 32 has been lowered.

The blade 16 is provided at the first plant holder 40 and a similar blade is also provided at the second plant holder 42. The blades 16 are adapted to cut a plant stem clamped by the first and second tweezers 46, 60 with the cut being made midway between the tweezers 46, 60. The blades 16 are not shown in Fig. 5 to 8.

Figures 9 to 14 show the second part of the apparatus which includes the dispense nozzle 24, the cure head 26 and the spray nozzel 28. The second part is arranged at the first plant holder 40. The dispense nozzle 24 is mounted on a precision slider 64 which in turn is mounted at the forward portion of the third linear slider 66. The dispense nozzle 24 can be moved by the third slider 64 into vicinity to the intersection of the rootstock 18 and the scion 20 held by the first and second tweezers 46, 60 in the first plant holder 40. The third slider 66 moves the dispense nozzle 24 up to a distance of about 1 cm from the intersection of the rootstock 18 and the scion 20. The dispense nozzle 24 is moved further into closer vicinity of the intersection by the precision slider 64 which is controlled by a vicinity sensor. The dispense nozzle 24 can be activated to dispense a small amount of the fast-curing adhesive supplied by a peristaltic pump.

The precision slider 64 has a stroke of about 2 cm and its velocity and position can be controlled precisely. When the adhesive 70 has been dispensed, the dispense nozzle 24 is retracted by the precision slider 64 rather slowly in order to avoid stringing of the adhesive. Because the adhesive is preferably thixotropic, it does not form stringings when the dispense nozzle 24 is retracted slowly, e.g. at about 2 mm/s.

The air-assisted water spray nozzle 28 and the cure head 26 (UV LED - UV Light Emitting Diode) are also mounted in association with the first plant holder 40. They are carried together by the forth slider 68 and can also be moved into vicinity to the intersection of the rootstock 18 and the scion 20 held by the first and second tweezers 46, 60 in the first plant holder 40. They can be moved up to a minimum distance of about 15 mm from the plant stem.

The precision, third and forth sliders 64, 66, 68 are linear pneumatically, hydraulically or electrically driven sliders.

Now the operation of the apparatus of Figs. 5 to 14 will be described:

Two seedlings in small pots are provided. The first seedling is selected for its root and is placed on the first plant holder 40. The second seedling is selected for its fruits and is placed on the second plant holder 42. The arm 32 is in its first position and each seedling stem is gently clamped by a first tweezers 46 and at a vertical distance of three centimeters by the second tweezers 60 (Fig. 5). The stems 10 are cut midway between the first and second tweezers 46, 60 by the blades 16. The arm 32 is then raised. A disinfectant is sprayed onto the blades 16 and the cut surfaces of the stems. When the arm 32 has reached its upper position, it is rotated through 180° and then lowered into its second position so that the upper portion of the first seedling comes in contact with the lower portion of the second seedling and vice versa. The lower part of the first seedling, which was selected for its root and now forms the root stock, and the upper part of the second seedling, which was selected for its roots and now forms the scion, are located on the first plant holder 40 at this juncture as shown in Fig. 9.

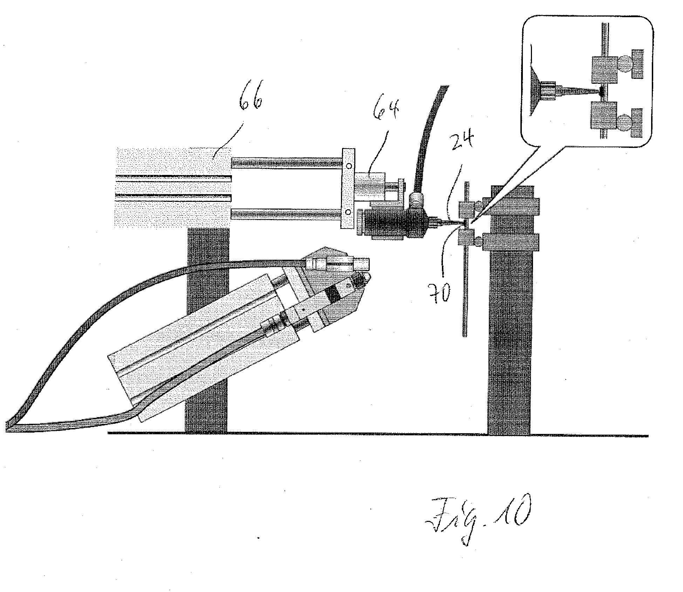

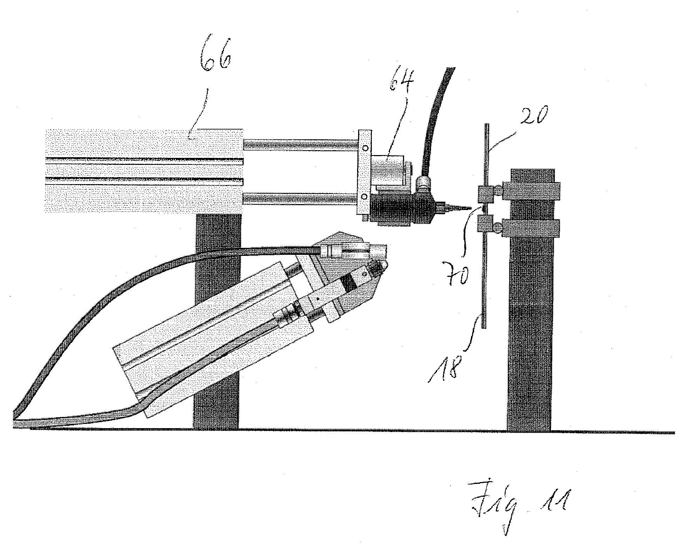

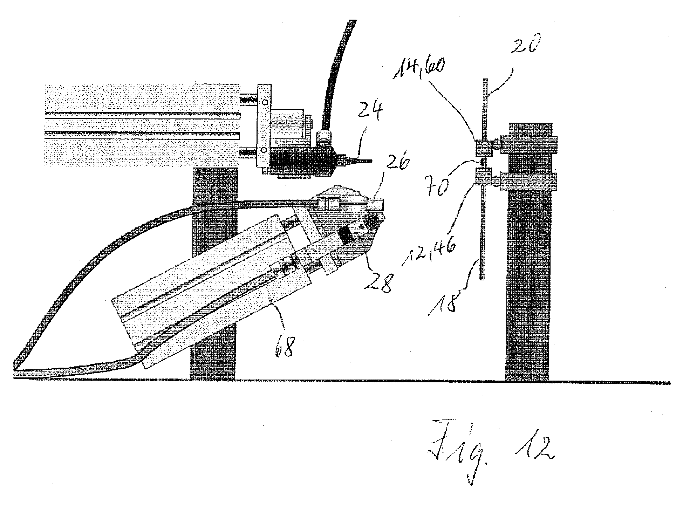

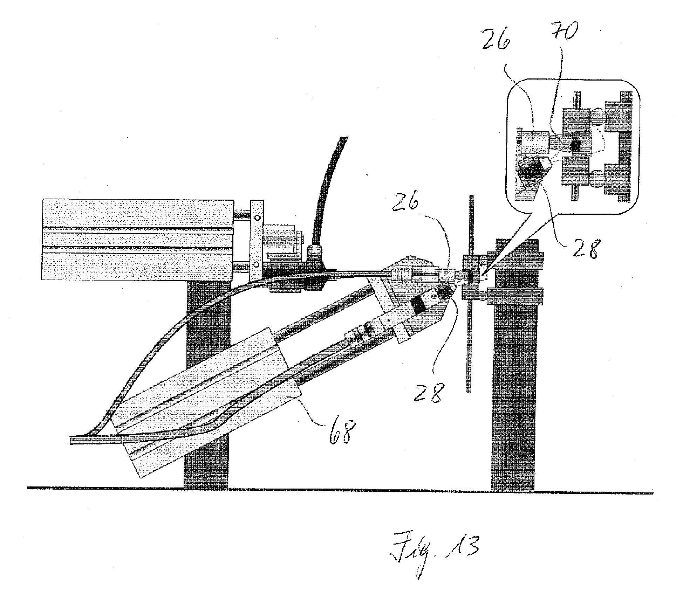

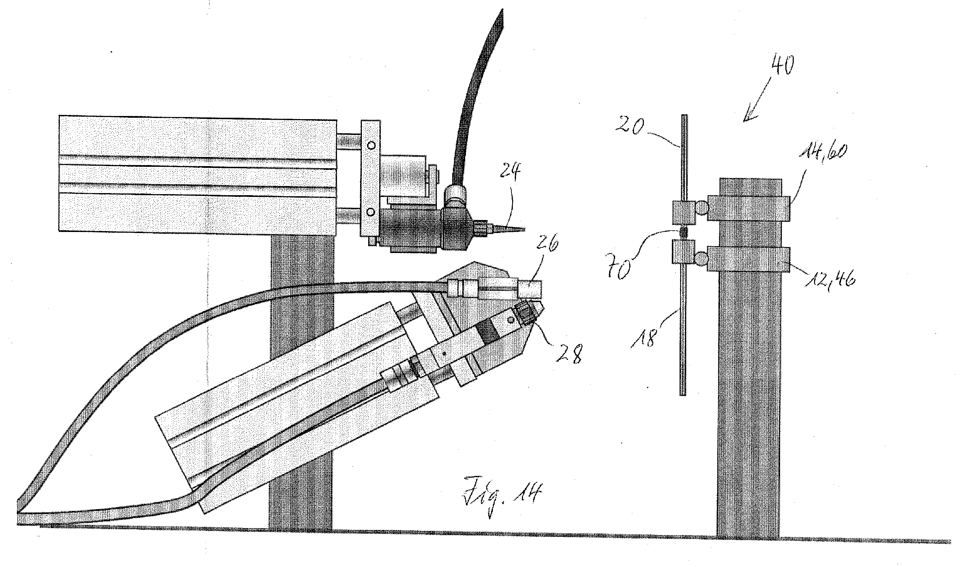

Next the dispense nozzle 24 is moved by the third linear slider 66 and the precision slider 64 close to the intersection of the two plant parts. The distance is about 0.3 millimeter. An adhesive patch 70 of 0.5 to 100 micro-liter of a fast-curing adhesive including a photoinitiator is applied by the dispensing nozzle 24 to the periphery of the stem at the intersection (Fig. 10). The dispensing nozzle 24 is retracted first by the precision slider 64 (Fig. 11) with low speed, and then by the third slider 66 (Fig. 12) with high speed. The low speed of the precision slider 64 prevents the CA from stringing and contaminating the fixtures, while the high speed of third slider 66 provides overall short cycle time. The air-assisted water spray nozzle 28 is moved by the forth slider 68 into a distance of about 15 millimeter of the adhesive patch 70 applied to the intersection. The adhesive patch 70 is spread by the air portion of the water spray ejected by the spray nozzle 28 around the periphery of the intersection and the surface of the adhesive patch 70 is wetted by the water portion of that spray. The water spray nozzle 28 is moved forward immediately when the adhesive patch 70 has been applied and is activated when it has reached its final position near the intersection. The cure head 26 is also carried by the forth slider 68 so that it is moved to the intersection simultaneously with the spray nozzle 28. The cure head 28 is activated about one second after the air-assisted water spray nozzle 28. The water spray nozzle 28 keeps spraying during the irradiation from the cure head 26 (Fig. 13). After a time period of about 4 seconds the water spray nozzle 28 and the cure head 26 are shut off and after a cure time of about a further 4 seconds the grafted plant has achieved handling strength (Fig. 14). The first and second tweezers 46, 60 are opened by rotation of the eccentric 52 and the grafted plant can be removed from the plant holder 40.

The lower plant portion and upper plant portion on the second plant holder 42 are discarded.

### Examples:

Many different types of cucumbers' and tomatoes' rootstocks and scions have been tried, which are mentioned below.
- Cucumbers' rootstocks: Becada RZ F1, RS481 Improved, Azman RZ F1, Bombo Improved and Triumph F1.
- Cucumbers' scions: Euphoria RZ F1.
- Tomatoes' rootstocks: Spirit F1.
- Tomatoes' scions: Pannovy F1.

Rootstock and scion were cut with a razor blade, previously sterilized with an ethanol solution. The rootstocks were cut with a straight cut and between 2 and 5 cm above the soil. The same was done with the scions but below the leaves.

Then, both parts were put in contact and pressed. By using diaphragm dispense valve or a peristaltic pump as a dispenser, between 5 and 100 µl of cyanoacrylate adhesive of the type Loctite 4308 UV-CA was applied onto the plant and spread with the applicator to cover half stem of the joint.

Just after dispensing the adhesive, water was sprayed and the UV light was applied, both simultaneously, so that the plant doesn't get damaged. This curing and cooling step was done between 2 and 10 seconds.

Once the plant is grafted, it is brought to a climate chamber under controlled conditions.

The results were 95 to 100% successful.

**List of reference numbers**

| | | | |
|---|---|---|---|
| 10 | stem | 40 | plant holder |
| 12 | clamp | 42 | plant holder |
| 14 | clamp | 44 | plant support |
| 16 | blade | 46 | first tweezers |
| 18 | rootstock | 48 | springs |
| 20 | scion | 50 | tips |
| 22 | clamp | 52 | eccentric |
| 24 | dispense nozzle | 54 | recesses |
| 26 | cure head | 60 | second tweezers |
| 28 | spray nozzle | 62 | pins |
| 29 | disinfectant nozzle | 64 | precision slider |
| 30 | basis | 66 | third slider |
| 32 | arm | 68 | forth slider |
| 34 | pivot point | 70 | adhesive patch |

## Claims

1. A method for the propagation of plants by grafting part (20) of a first plant on at least part (18) of a second plant, comprising the following steps:
preparing the part (20) of the first plant and the at least part (18) of the second plant by baring part of the tissue of the first and the second plant;
bringing into contact the bared parts (18, 20) of tissue of the first and second plant at an intersection; and
applying a fast-curing adhesive (70) around the intersection onto the surface of the plants;
curing the adhesive (70);
**characterized by**
the adhesive (70) being an adhesive which is curable by light; and
curing the adhesive (70) by irradiation of light.

2. The method of claim 1, wherein the adhesive is curable by light having a wavelength between 200 and 500 nm and the light with which the adhesive (70) is irradiated has a wavelength between 200 and 500 nm.

3. The method of claim 1 or 2, wherein the adhesive (70) is a cyanoacrylate adhesive including a photoinitiator.

4. The method of claim 1, 2 or 3, wherein the adhesive (70) applied to the surface of the plants is cooled.

5. The method of claim 4, wherein the adhesive (70) is cooled by spraying water, an aqueous solution or a gaseous fluid onto the adhesive during curing.

6. The method of any one of claims 1 to 5, wherein the adhesive (70) is spread by an air jet on the surface of the plants.

7. An apparatus for carrying out the method of any one of claims 1 to 6 for, comprising:
means for clamping (46, 60) the first and second plants (18, 20) so as to bring their bared parts into contact at an intersection;
a nozzle (24) adapted to dispense the adhesive (70) around the intersection; **characterized**
**by** a light source (26) for emitting light of a wavelength between 200 and 500 nm onto the applied adhesive.

8. The apparatus of claim 7, comprising a nozzle (28) for spraying water, an aqueous solution or a gaseous fluid onto the adhesive (70) applied around the intersection.

9. The apparatus of claim 7 or 8, comprising a nozzle (28) for directing an fluid jet onto the applied adhesive (70) so as to spread the adhesive (70) over the surface of the plants (18, 20).

10. The apparatus of claim 9, wherein the spraying nozzle (28) produces also the fluid jet.
